# EUROPEAN PATENT SPECIFICATION

(11) **EP 0 985 727 B1**
(45) Date of publication and mention of the grant of the patent: **14.05.2003**
(21) Application number: 99106358.7
(22) Date of filing: 29.03.1999
(51) Int. Cl.: C10M 169/02, C10M 105/48, G11B 19/20

(54) **Spindle motor comprising a carbonic ester based grease**
Ein Karbonsäureester enthaltender Spindelmotor
Un moteur de broche comprenant un ester à base d'un ester d'acide carbonique

(30) Priority: 09.09.1998 JP 25498298
(43) Date of publication of application: 15.03.2000
(73) Proprietor: MINEBEA CO., LTD., Kitasaku-gun, Nagano-ken (JP)
(72) Inventor: Akiyama, Motoharu Minebea Co., Ltd., Miyota-machi, Kitasaku-gun, Nagano-ken (JP)
(74) Representative: Patentanwälte Schaad, Balass, Menzl & Partner AG

(56) References cited:
- EP-A- 0 867 499
- GB-A- 2 278 612
- US-A- 2 739 127
- US-A- 3 987 232
- US-A- 5 714 444

## Description

### BACKGROUND OF THE INVENTION

### 1. Field of Invention

The present invention relates to a spindle motor used in HDDs (hard disc drives), FDDs (floppy disc drives) or the like.

### 2. Description of Related Art

Conventionally, in a spindle motor used in HDDs (hard disc drives), FDDs (floppy disc drives) or the like, it is general that ball bearings are used as bearings, and diester synthetic oil, polyol synthetic oil and grease having a mixture of these kinds of oil as base oil are used as lubricant for the bearings.

By the way, recently, in HDDs or FDDs, the miniaturization in size, the reduction in weight, and the increase in storage capacity have been accelerated. In accordance with this tendency, in the spindle motor, it is demanded to correspond to the miniaturization in size, the reduction in thickness and the increase of the rotational speed. Furthermore, the severe characteristic condition is imposed on the spindle motor with respect to, for example, the following items.
(i) low noise (acoustic noise)
(ii) rotational precision (NRRO: non-repetitive run out)
(iii) anti-shock property (G: acceleration, yield value)
(iv) low dust (particle number: dust produced by the bearing upon the rotation of the motor, and the number of the particles of the grease dispersed upon the rotation)
(v) low out gas
(vi) low consumption power (low current)
(vii) long service life (low characteristic change for a long term use, in particular, at rotational portions)

Any one of the above items relates largely to the characteristics of the bearing. One of the factors that largely effect the characteristics of the bearing is a lubricant. With the conventional grease, there is a predetermined limit regarding the miniaturization in size of the spindle motor, i.e., the HDD or FDD. It is desired to apply the lubricant that has good performance (low viscosity, low torque, i.e., low resistance (friction) upon the rotation of the bearing such as a ball bearing and smooth rotation of the roll members such as balls, low evaporation amount, i.e., low evaporation amount of oil component contained in the grease, wear resistance, low out gas which is obtained by gasification of the grease molecule) to the spindle motor.

### SUMMARY OF THE INVENTION

In view of the foregoing requirements, an object of the present invention is to provide a spindle motor that may be miniaturized, thinned and used at a high rotational speed.

According to a first aspect of the present invention, a spindle motor in which a rotor is provided to be rotatable through a bearing to a stator is characterized in that grease having carbonic acid ester synthetic oil as base oil is used as lubricant for the bearing.

According to a second aspect of the invention in the first aspect of the present invention, it is characterized in that the bearing is a rolling bearing.

According to a third aspect of the invention in the first aspect of the present invention, it is characterized in that the bearing is a slide bearing.

According to a fourth aspect of the invention in the second aspect of the present invention, it is characterized in that the bearing is a ball bearing.

According to a fifth aspect of the invention in the second aspect of the present invention, it is characterized in that the bearing is a roller bearing.

### BRIEF DESCRIPTION OF THE DRAWINGS

In the accompanying drawings:
Fig. 1 is a cross-sectional view showing a spindle motor 1A in accordance with one embodiment of the present invention;
Fig. 2 is a graph showing a shift characteristic of a G value (vibration) in a long-term test conducted under a high speed rotation for the spindle motor (motor according to the present invention) shown in Fig. 1 and a conventional motor;
Fig. 3 is a graph showing a shift characteristic of a noise due to the high speed rotation for the spindle motor shown in Fig. 1 and the conventional motor;
Fig. 4 is a graph showing a shift characteristic of a noise in high and low speed rotational tests for the spindle motor shown in Fig. 1 and the conventional motor;
Fig. 5 is a graph showing a shift characteristic of the motor current in the long-term test conducted under the high speed rotation for the spindle motor shown in Fig. 1 and the conventional motor; and
Fig. 6 is a graph showing a shift characteristic of an NRRO (non-repetitive run out) in the long-term test at the high rotational speed for the spindle motor shown in Fig. 1 and the conventional motor.

### DETAILED DESCRIPTION OF PREFERRED EMBODIMENTS

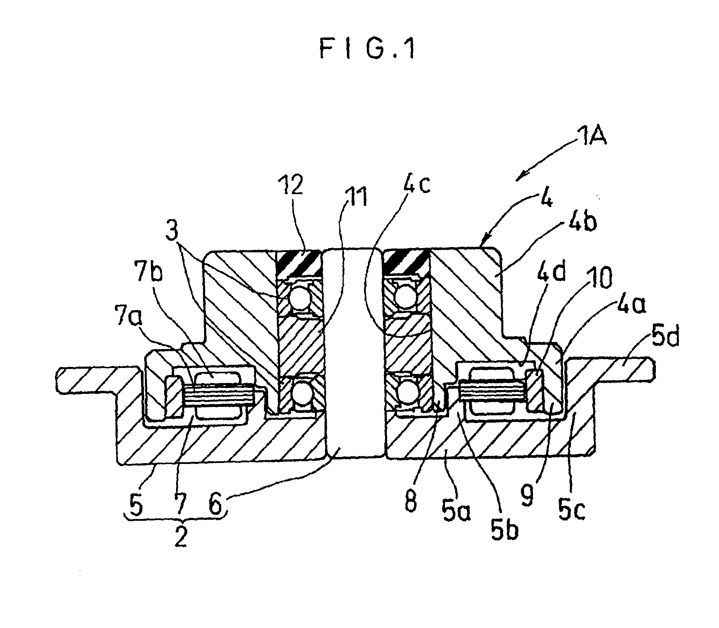

A spindle motor in accordance with one embodiment of the present invention will now be described with reference to Figs. 1 to 8. In Fig. 1, a spindle motor 1A is constructed so that a rotor 4 is rotatably provided through ball bearings 3 (bearing) to a stator 2 and may be used in a HDD (reference numeral is omitted). Grease (reference numeral is omitted) having carbonic acid ester synthetic oil as base oil is used as lubricant for the ball bearings 3.

The stator 2 is generally composed of a substantially disc-like mounting plate 5, a shaft 6 which is formed into one piece at a center of a mounting plate 5 by means of press-inserting or the like and is projected on one surface side, and a magnetic field generating section 7 mounted on the mounting plate 5. The mounting plate 5 is composed of a substantially disc-like mounting plate body 5a, first and second annular walls 5b and 5c provided vertically in a double sleeve structure on one side surface of the mounting plate body 5a, and a flange 5d formed radially outwardly from the second annular wall 5c.

The magnetic field generating section 7 is composed of a stator core 7a fixed on the outer circumferential side of the first annular wall 5b, and an armature coil 7b held at the stator core 7a.

The rotor 4 is composed of a rotor body 4a having a somewhat smaller diameter than an inner diameter of the above-described second annular wall 5c, and a rotor sub-part 4b having a smaller diameter than that of the rotor body 4a and formed integrally with the rotor body 4a. A hole 4c having a larger inner diameter than the diameter of the shaft 6 is formed in the rotor body 4a and the rotor sub-part 4b. An annular recess 4d is formed in a surface, facing the rotor sub-part 4b, of the rotor body 4a. The inner annular wall and the outer annular wall left in the rotor body 4a by the formation of the annular recess 4d will be referred to as a rotor inner annular wall 8 and a rotor outer annular wall 9, respectively, in the following description for the sake of explanation. Then, the rotor 4 is inserted into the shaft 6 with the recess 4d facing the mounting plate 5 of the stator 2.

A magnet 10 is mounted on a surface portion, facing the rotor inner annular wall 8, of the rotor outer annular wall 9 so as to receive a rotational torque in response to the magnetic force of the above-described magnetic field generating section 7 and may be rotated together with the rotor 4.

The pair of ball bearings 3 are interposed between the rotor 4 and the shaft 6 (stator 2) so that the rotor 4 may be rotated relative to the stator 2. An annular spacer 11 is interposed between the pair of ball bearings 3. Also, a shield ring 12 is interposed between the tip end portion of the bearing 6 and the rotor sub-part 4b so as to be juxtaposed with the bearings 3.

Metal soap base grease (grease having carbonic acid ester synthetic oil as base oil) having carbonic acid ester (represented by the chemical formula (1)) as a main component is sealed in the bearings 3 and may be used as lubricant.

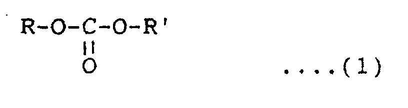

The carbonic acid ester (synthetic oil) contained in the metal soap base grease has an intrinsic property with a low torque, a low evaporation amount and an excellent wear-resistance.

A variety of characteristic comparison tests were conducted for the spindle motor 1A thus composed of this embodiment (hereinafter referred to as the motor 1A according to the present invention for the sake of explanation, appropriately), and a conventionally generally used spindle motor 1B provided with the bearings 3 into which the grease having the mixture oil of the diester synthetic oil and the polyol synthetic oil, having been used generally as lubricant, as base oil was sealed (hereinafter referred to as the conventional motor when applicable for the sake of the explanation). As described later, the results showing the superiority of the embodiment of the present invention could be obtained. The measurement results of the motor 1A of the present invention are shown by A and the measurement results of the conventional motor 1B are shown by B.

Then, the embodiment of the present invention has such a superiority, so that the spindle motor 1A may be miniaturized in size, thinned and used at a higher rotational speed. As a result, it is possible to suitably cope with the miniaturization in size, the reduction in weight and the increase of storage capacity of the HDD.

The above-described characteristic comparison tests includes (I) a long run test at a high rotational speed and (II) a heat cycle test at a high rotational speed. These tests will now be described, respectively.

### (I) long run test at a high rotational speed

This test is to confirm whether the characteristics are degraded in the case where the spindle motor was rotated for a long period of time under the HDD actual-installed load condition at a high rotational speed which would be required at the high rotational speed of the HDD in future, i.e., whether it is possible to maintain the stable characteristics during the long time rotation (for long time use). This is one of the most important items out of the confirmation test items.
(a) Each characteristic comparison was conducted after the running test for 1,000 hours at a high rotational speed to obtain the results shown in Table 1.

**Table 1**

| test items | conventional motor 1B (B) | motor 1A of the present invention (A) | (A-B)/B |
|---|---|---|---|
| G value | 23.0 | 19.5 | -15.2(%) |
| noise | 40.5 | 39.9 | -1.5(%) |
| motor current upon rotation (run current) | 100.8 | 82.0 | -18.7(%) |
| non-repetitive run out (NRRO) | 5.99 | 5.32 | -11.2(%) |
| out gas | 24.61 | 20.83 | -15.4(%) |

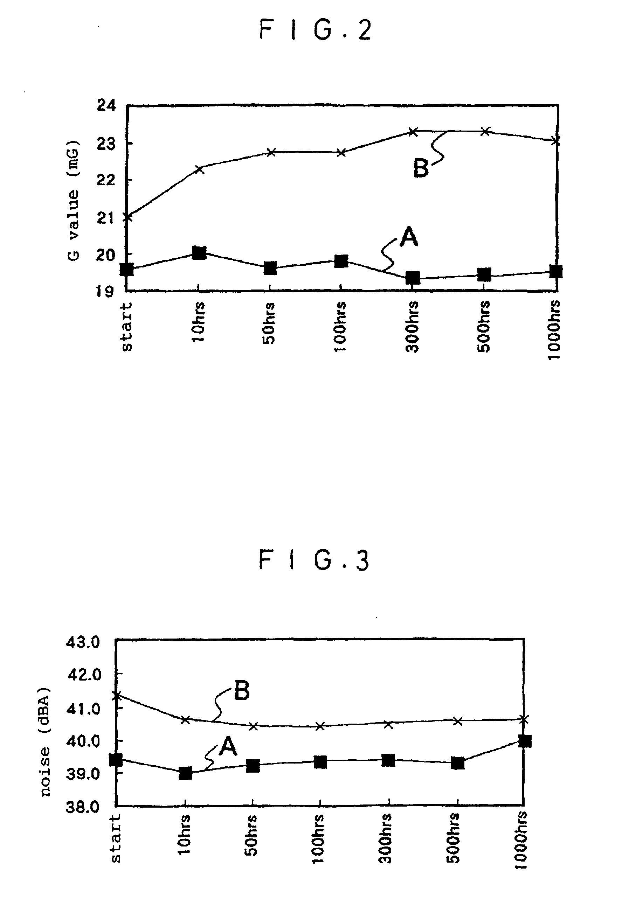

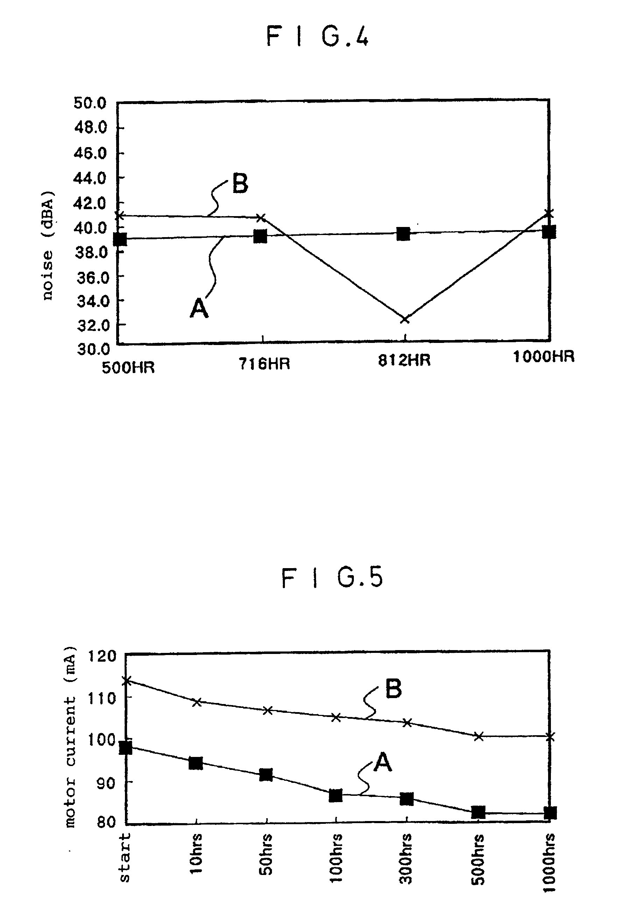

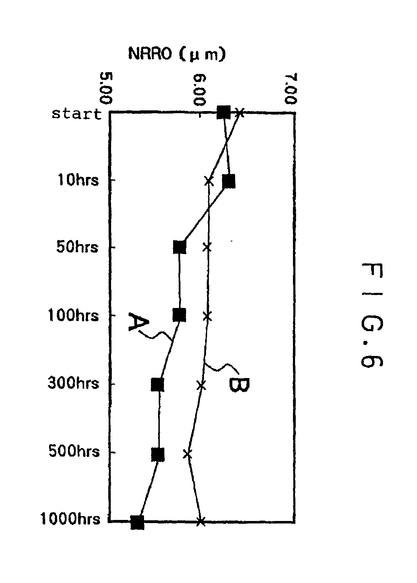

(b) In the test items of Table 1, the G value shows the value when the vibration upon rotation of the spindle motor (the motor 1A of the present invention and the conventional motor 1B) was measured by an acceleration meter.
Also, the noise is what was measured by a sound pressure meter upon the rotation.
The out gas shows an amount of gas generated from adhesives or the like used in the motor or the grease of the ball bearings 3 at a predetermined temperature and for a predetermined period of time.
The values of these test results relates directly to the ball bearings 3, hence, the characteristics of the grease used in the ball bearings 3.
(c) As shown in Table 1, the characteristics after the rotation for a long time (1,000 hours) at a high rotational speed was reduced by several percent to several tens percent in comparison of the measurement value A of the motor 1A of the present invention and the measurement value B of the conventional motor 1B in any case.
(d) The characteristic shift relative to the lapse of time in the long run test at a high rotational speed was measured to obtain the results shown in Figs. 2 to 6.
(e) The shift of the G values (vibration) relative to the lapse of time was measured and the data shown in Fig. 2 were obtained.
As shown in Fig. 2, the G value (vibration) of the conventional motor 1B was large. The values was increased as time has lapsed.
In contrast, the G value (vibration) of the motor 1A of the present invention was small in comparison with the conventional motor 1B, and the change relative to the lapse of time was small and stable to exhibit the excellent characteristics.
(f) The shift of noise relative to the lapse of time was measured to obtain the data shown in Figs. 3 and 4 were obtained. Fig. 3 shows the data in case of the continuous high speed rotation and Fig. 4 shows the data in the case where the high speed rotation and the low speed rotation were conducted alternately.
(g) As is apparent from the data shown in Fig. 3, it is understood that the motor 1A of the present invention exhibited the low noise over the entire time range in comparison with the conventional motor 1B. Incidentally, in Fig. 4, the conventional motor 1B exhibited an extreme drop on the way. This is presumably because the grease (grease having the mixture of the diester synthetic oil and the polyol synthetic oil as base oil) has an unstable lubrication property.
(h) The shift of the current of the spindle motors (the motor 1A of the present invention and the conventional motor 1B) relative to the lapse of time was measured to obtain the data shown in Fig. 5. As shown in Fig. 5, the current (A) of the motor 1A of the present invention exhibited the small value over the entire time range relative to the current (B) of the conventional motor 1B. This is because the feature of the low viscosity and the low torque property would be exhibited by the grease having the carbonic acid ester synthetic oil as base oil used in the ball bearings 3 of the motor 1A of the present invention.
(i) The NRRO (non-repetitive run out) measured at the hub-disc mounting surface of the spindle motor (the motor 1A of the present invention and the conventional motor 1B) is shown in Fig. 6. As shown in Fig. 6, the NRRO of the motor 1A of the present invention exhibited a smaller value as time lapsed relative to the conventional motor 1B. This means that the rotational precision was improved. It is safe to say that this relates to not only the stability of the lubrication of the ball rolling surface but also the good characteristics of the grease.

As described above, in the results of the long term rotation test at the high rotational speed corresponding to a kind of a service life test, it was testified that the measurement value A of the motor 1A of the present invention was superior to any of the measurement values B of the conventional motor 1B with respect to the various characteristics required for the spindle motors 1A and 1B in the provision of the above-described HDD.

As described above, in the spindle motor 1A according to the embodiment of the present invention, the lubricant (grease having the carbonic acid ester synthetic oil as base oil) used in the ball bearings 3 had a low viscosity property (see the above paragraph (a)) so that the good oil film maintenance property upon rotation of the ball rolling surfaces may be kept and had the low evaporation property (see the column of the out gas in Table 1) so that the leakage of the oil component and the oil film break may be prevented to maintain the smooth lubrication. Finally, as shown in Table 1, therefore, the vibration G value upon the rotation may be suppressed, the noise is reduced and the NRRO (non-repetitive run out precision) may be enhanced.

### (II) heat cycle test at a high rotational speed

This is one of the severe evaluation tests for confirming the characteristic change in case of an addition of the temperature shock in high speed rotation. The measurement results of the heat cycle load test are shown for three cycles of [0°C → 60°C → ordinary temperature]/8 hours for the motor 1A of the present invention and the conventional motor 1B.

**Table 2**

| test items | conventional motor 1B (B) | motor 1A of the present invention (A) | (A-B)/B |
|---|---|---|---|
| G value | 21.0 | 19.6 | -6.7(%) |
| noise | 41.5 | 39.4 | -4.8(%) |
| motor current upon rotation (run current) | 114.0 | 98.4 | -13.7(%) |
| non-repetitive run out (NRRO) | 6.44 | 6.26 | -2.8(%) |

(a) As shown in Table 2, the measurement value A of the motor 1A of the present invention 1A relative to the heat cycle load was superior to the measurement value B of the conventional motor 1B in any case.
(b) The fact that the measurement value A of the motor 1A of the present invention thus exhibited the good value is because the lubricant of the motor 1A of the present invention (grease having the carbonic acid ester synthetic oil as base oil) had the low viscosity and the low evaporation property and because the lubricant worked in a stable manner at the ball rolling surfaces at either a high temperature or a low temperature.

In the characteristic comparison of the spindle motor 1A of the present invention in (I) the long run test at the high rotational speed and under the severe kind of the test condition (II) which is the heat cycle test at the high rotational speed as described above, the superiority of the motor 1A of the present invention to the conventional motor 1B has been described as above.

Then, it is safe to say that the main factor of the fact that the motor 1A of the present invention thus has the superiority to the conventional motor 1B is clearly related to the grease since only the greases which are sealed in the ball bearings 3 assembled into respective spindle motors are different from each other due to the difference between the motor 1A according to the present invention and the conventional motor 1B.

The superiority of the motor 1A of the present invention provided with the ball bearings 3 using the grease having the carbonic acid ester synthetic oil as base oil as the lubricant as described above to the conventional motor 1B has been explained as described above. The superiority of the motor 1A of to the present invention may be summarized as follows:
(1) The G value caused by the rotational vibration is small;
(2) The characteristic change is a little and stable for the long-term use;
(3) The rotational precision such as the NRRO (non-repetitive run out) is high;
(4) The noise is small and the sound pressure level is low;
(5) The run current (rotational current) of the motor is small due to the intrinsic low torque property of the grease;
(6) The characteristic change relative to the drive and environmental temperature change is small;
(7) The out gas is a little;
(8) The rotational service life is long;
(9) It is possible to readily realize the higher speed rotation of the HDD; and
(10) The grease having the carbonic acid ester synthetic oil as base oil has the characteristics of the low evaporation amount and the low viscosity so that the problem concerning the oil migration caused by the conventional motor 1B may be solved.

The motor 1A of the present invention has the above-described superiority so that the motor may be miniaturized and thinned in the case where the motor 1A of the present invention is used in the HDD.

In the above-described embodiment, the spindle motor 1A used in the HDD has been explained. However, the present invention is not limited to this. It is possible to apply the motor to any other suitable device such as an FDD.

In the above-describe embodiment, the case where the grease having the carbonic acid ester synthetic oil as base oil is sealed as the lubricant for the ball bearings 3. However, the present invention is not limited to this. It is possible to coat the ball bearings 3 with the grease having the carbonic acid ester synthetic oil as the base oil, as the lubricant.

In the above-described embodiment, the bearings are the ball bearings 3. However, the present invention is not limited to this. It is possible to apply the present invention to any other suitable bearings such as slide bearings, roller bearings or the like.

According to the present invention, it is provided with the bearings using the grease having the carbonic acid ester synthetic oil as base oil that is superior in low torque, low evaporation amount and anti-wear property as lubricant. The motor according to the present invention has the following superiority in comparison with the conventional motor provided with the grease having the mixture of the diester synthetic oil and the polyol synthetic oil as the base oil, as the lubricant, that is,
(1) The G value caused by the rotational vibration is small.
(2) The characteristic change is small and stable for the long-term use.
(3) The rotational precision such as the NRRO (non-repetitive run out) is high.
(4) The noise is small and the decibel level is low.
(5) The run current (rotational current) of the motor is small due to the intrinsic low torque property of the grease.
(6) The characteristic change relative to the drive and environmental temperature change is small.
(7) The out gas is a little.
(8) The rotational service life is long.
Thus, the present invention ensures the superiority and may be applied to the HDD or FDD, so that it is possible to readily realize the miniaturization, thinning and high rotational speed.

Various details of the invention may be changed without departing from its scope. Furthermore, the foregoing description of the embodiments according to the present invention is provided for the purpose of illustration only, and not for the purpose of limiting the invention as defined by the appended claims and their equivalents.

## Claims

1. A spindle motor in which a rotor is provided to be rotatable through a bearing to a stator, wherein grease having carbonic acid ester synthetic oil as base oil is used as lubricant for said bearing.

2. The spindle motor according to claim 1, wherein the bearing is a rolling bearing.

3. The spindle motor according to claim 1, wherein the bearing is a slide bearing.

4. The spindle motor according to claim 1, wherein the bearing is a ball bearing.

5. The spindle motor according to claim 1, wherein the bearing is a roller bearing.

## Patentansprüche

1. Spindelmotor, bei dem ein über ein Lager an einem Stator drehbarer Rotor vorgesehen ist, wobei Schmierfett mit synthetischem Kohlensäureester-Öl als Basisöl als Schmiermittel für das Lager verwendet wird.

2. Spindelmotor nach Anspruch 1, wobei das Lager ein Wälzlager ist.

3. Spindelmotor nach Anspruch 1, wobei das Lager ein Gleitlager ist.

4. Spindelmotor nach Anspruch 1, wobei das Lager ein Kugellager ist.

5. Spindelmotor nach Anspruch 1, wobei das Lager ein Rollenlager ist.

## Revendications

1. Moteur de broche dans lequel un rotor est prévu pour pouvoir tourner à travers un palier d'un stator, dans lequel on utilise comme lubrifiant pour ledit palier de la graisse ayant une huile synthétique à base d'ester d'acide carbonique en tant qu'huile de base.

2. Moteur de broche selon la revendication 1, dans lequel le palier est un palier à roulement.

3. Moteur de broche selon la revendication 1, dans lequel le palier est un palier à glissement.

4. Moteur de broche selon la revendication 1, dans lequel le palier est un roulement à billes.

5. Moteur de broche selon la revendication 1, dans lequel le palier est un palier à rouleaux.
